# DEMANDE DE BREVET EUROPEEN

(11) **EP 4 764 426 A1**
(43) Date de publication de la demande: **24.06.2026**
(21) Numéro de dépôt: 25224739.0
(22) Date de dépôt: 18.12.2025
(51) Int. Cl.: G01F 23/16, G01L 7/06, B25J 15/00, B25J 15/06, B65G 47/91, B66C 1/02, G01L 11/00, G01L 13/02, G01L 19/12

(54) **INDICATEUR VISUEL DE DÉPRESSION DANS UN CIRCUIT PNEUMATIQUE**

(30) Priorité: 18.12.2024 FR 2414456
(71) Demandeur: Coval, 26120 Montelier (FR)
(72) Inventeur: JOGUET-RECCORDON, Loïc, 07130 SOYONS (FR)
(74) Mandataire: Cabinet Boettcher

(57) **Abrégé**

Indicateur (10) visuel de dépression dans un circuit pneumatique (3), comprenant : un corps (11) creux ayant une base (12) et un sommet (13) qui sont reliés par au moins une paroi latérale (14) pourvue d'au moins une fenêtre (15) au voisinage du sommet (13) ; un élément de raccordement (16) au circuit pneumatique (3) qui est solidaire de la base (12) du corps (11) et qui débouche dans le corps (11) par un conduit (18) ménagé dans la base (12) du corps (11) ; un soufflet (19) qui a une première extrémité (19.1) ouverte fixée à la base (12) en regard du conduit (18) et une deuxième extrémité (19.2) fermée et qui est déformable entre un état déployé dans lequel la deuxième extrémité (19.2) s'étend au voisinage du sommet (13) en regard de la fenêtre (15) et un état rétracté dans lequel la deuxième extrémité (19.2) s'étend entre la base (12) et la fenêtre (15) ; et un dispositif d'attraction magnétique (23) comprenant un premier élément (23.1) solidaire d'une paroi frontale de la deuxième extrémité (19.2) du soufflet (19) et un deuxième élément (23.2) solidaire du sommet (13) pour exercer sur le premier élément (23.1) un effort de retenue prédéterminé lorsque le soufflet (19) est dans son état déployé.

## Description

La présente invention concerne le domaine des circuits pneumatiques et plus particulièrement les circuits de vide.

### ARRIERE PLAN DE L'INVENTION

Les circuits de vide sont par exemple utilisés dans le domaine de la manutention, et plus particulièrement dans les préhenseurs à vide comprenant un circuit de vide et des ventouses qui sont appliquées sur une surface extérieure d'objets pour exercer sur celle-ci un effet de succion ou aspiration lorsque les ventouses sont connectées au circuit de vide.

Pour s'assurer de l'efficacité de l'effet de succion/aspiration, il est intéressant de savoir si le circuit de vide est opérationnel et si les ventouses sont bien soumises à une dépression.

Il est connu des indicateurs visuels de vide de type manomètre mais ceux-ci sont relativement complexes, fragiles et encombrants.

### OBJET DE L'INVENTION

L'invention a notamment pour but de fournir un indicateur de vide qui soit simple, fiable et robuste et de préférence visible à distance pour un opérateur.

### RESUME DE L'INVENTION

A cet effet, on prévoit, selon l'invention un indicateur de dépression dans un circuit pneumatique, comprenant : un corps creux ayant une base et un sommet qui sont reliés par au moins une paroi latérale ; un élément de raccordement au circuit pneumatique qui est solidaire de la base du corps et qui débouche dans le corps par un conduit ménagé dans la base du corps ; un soufflet qui a une première extrémité ouverte fixée à la base en regard du conduit et une deuxième extrémité fermée et qui est déplaçable entre un état déployé dans lequel la deuxième extrémité est rapprochée du sommet et un état rétracté dans lequel la deuxième extrémité est rapprochée de la base, la paroi latérale étant pourvue d'au moins une fenêtre pour visualiser le soufflet dans l'un de ses états ; et un dispositif d'attraction magnétique comprenant un premier élément solidaire d'une paroi frontale de la deuxième extrémité du soufflet et un deuxième élément solidaire du sommet pour exercer sur le premier élément un effort de retenue prédéterminé lorsque le soufflet est dans son état déployé.

On comprend que :
- le soufflet passe de son état déployé à son état rétracté lorsque le circuit auquel est relié l'indicateur est en dépression de sorte que l'état du soufflet dépend de la pression dans ledit circuit ;
- le dispositif d'attraction magnétique définit un seuil d'effort nécessaire pour autoriser l'écrasement du soufflet.

Ainsi, lorsque le circuit auquel l'indicateur est relié est à une dépression insuffisante pour engendrer sur le soufflet un effort capable de vaincre l'effort d'attraction mutuelle du premier élément et du deuxième élément, le soufflet est dans son état déployé et s'étend en regard de la fenêtre si la fenêtre est positionnée au voisinage du sommet. Au contraire, lorsque le circuit auquel l'indicateur est relié arrive à une dépression suffisante pour engendrer sur le soufflet un effort capable de vaincre l'effort d'attraction mutuelle du premier élément et du deuxième élément, le soufflet passe dans son état rétracté et quitte la fenêtre. La puissance de l'aimant produisant l'effort d'attraction magnétique est déterminée pour que ledit effort d'attraction magnétique corresponde à l'effort engendré sur le soufflet par la dépression de fonctionnement nominal du circuit. Il est donc possible de déterminer si le circuit est en fonctionnement nominal ou pas à partir de ce qu'il est possible de voir par la fenêtre de l'indicateur selon l'invention. Cet indicateur a donc une structure simple avec peu de liaisons mécaniques articulées, ce qui lui permet d'être robustes. En outre, le réglage de l'indicateur est simple puisqu'il suffit de choisir un aimant de puissance adaptée.

Selon des caractéristiques optionnelles, utilisées individuellement ou tout ou partie en combinaison :
- l'indicateur comprend un élément élastique de rappel du soufflet dans son état déployé ;
- l'élément élastique de rappel est un ressort hélicoïdal s'étendant dans le soufflet entre la base et la paroi frontale de la deuxième extrémité du soufflet ;
- la deuxième extrémité du soufflet est recouverte par un piston ayant une jupe latérale visible par la fenêtre lorsque le soufflet est dans l'état correspondant ;
- le piston constitue la paroi frontale de la deuxième extrémité du soufflet ;
- la jupe est agencée pour contraster visuellement avec la paroi latérale du corps lorsque la jupe du piston est visible par la fenêtre ;
- l'indicateur comprend un contacteur électrique fixé dans le corps pour être actionné par la jupe lorsque le soufflet est dans son état rétracté ;
- le premier élément comprend un matériau ferromagnétique et le deuxième élément comprend un aimant ;
- l'extrémité ouverte du soufflet enserre élastiquement un embout tubulaire qui s'étend en saillie de la base autour du conduit ;
- l'élément de raccordement est un embout s'étendant en saillie de la base à l'extérieur du corps.

L'invention concerne également un dispositif de préhension à ventouse comprenant au moins un indicateur de dépression.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :

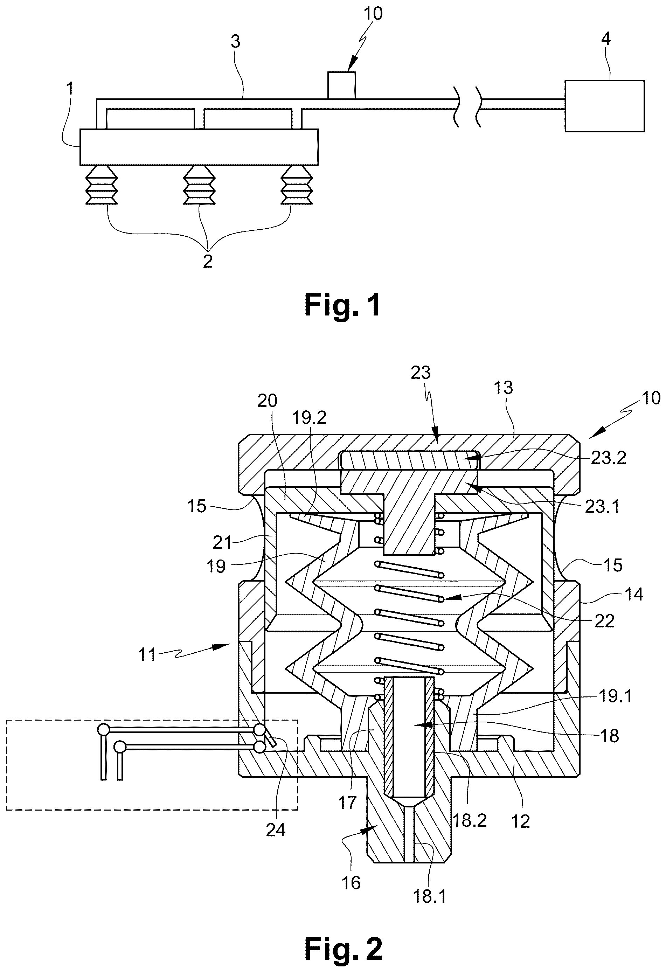

[Fig. 1] La figure 1 est une vue schématique d'un préhenseur à vide équipé d'un indicateur visuel selon l'invention ;
[Fig. 2] La figure 2 est une vue en coupe axiale d'un indicateur visuel selon l'invention.

### DESCRIPTION DETAILLEE DE L'INVENTION

En référence aux figures, le préhenseur à vide comprend une tête de saisie 1 pourvue de ventouses 2 appartenant à un circuit pneumatique 3 reliant les ventouses 2 à au moins une source de vide 4 telle qu'un ou plusieurs éjecteurs. La structure et le fonctionnement d'un tel préhenseur sont connus en eux-mêmes et ne seront pas plus détaillés ici.

Le circuit pneumatique 3 est pourvu d'au moins un indicateur de dépression 10.

L'indicateur de dépression 10 comprend un corps 11 creux ayant une base 12 et un sommet 13 qui sont reliés l'un à l'autre par au moins une paroi latérale 14 pourvue d'au moins une fenêtre 15 au voisinage du sommet 13. Le corps 11 est ici formé par assemblage de trois parties emboîtées à savoir, un premier boîtier formant la base 12, un tube formant la paroi latérale 14 ayant une première extrémité emboîtée dans le premier boîtier et un deuxième boîtier emboîté sur une deuxième extrémité du tube pour former le sommet 13.

La base 12 comprend un premier embout 16 et un deuxième embout 17 qui s'étendent coaxialement l'un à l'autre en saillie de deux faces opposées de l'embase 12, le premier à l'extérieur du corps 11 et le deuxième à l'intérieur du corps 11. Un conduit 18 est ménagé axialement dans le premier embout 16, l'embase 12 et le deuxième embout 17. Le conduit 18 comprend ici un premier tronçon 18.1 s'étendant dans le premier embout 16 et un deuxième tronçon 18.2 s'étendant dans l'embase 12 et le deuxième embout 17. Le deuxième tronçon 18.2 accueille ici une douille saillant du deuxième tronçon 18.2 et définissant une section de passage du deuxième tronçon 18.2 qui est ici supérieure à la section de passage de premier tronçon 18.1.

Le premier embout 16 a une surface externe filetée pour pouvoir être engagé dans un taraudage débouchant dans le circuit pneumatique 3 et ainsi former un élément de raccordement de l'indicateur de dépression 10 au circuit pneumatique 3.

Le corps 11 contient un soufflet 19 qui a une première extrémité 19.1, ouverte, fixée à la base 12 en regard du conduit 18 et une deuxième extrémité 19.2, fermée. Le soufflet 19, ici en élastomère, est agencée pour être déformable entre un état déployé dans lequel la deuxième extrémité 19.2 s'étend au voisinage du sommet 13 en regard de la fenêtre 15 et un état rétracté dans lequel la deuxième extrémité 19.2 s'étend entre la base 12 et la fenêtre 15.

La première extrémité 19.1 du soufflet 19 enserre élastiquement le deuxième embout 17 qui s'étend en saillie de la base 12 autour du conduit 18.

La deuxième extrémité 19.2 du soufflet 19 est recouverte par un capot ou piston 20 pourvu d'une jupe latérale 21 visible par la fenêtre 15 lorsque le soufflet 19 est dans son état déployé. Le piston 20 est ici collé sur le bord annulaire de la deuxième extrémité 19.2 du soufflet 19 et constitue la paroi frontale de la deuxième extrémité 19.2 du soufflet 19. La jupe 21 redescend le long d'une partie du soufflet 19 voisine de la deuxième extrémité 19.2 et est agencée pour contraster visuellement avec la paroi latérale 14 du corps 11 lorsque la jupe 21 est visible par la fenêtre 15. La jupe 21 vient en butée contre la base 12 lorsque le soufflet 19 est dans son état rétracté de sorte que la jupe 21 limite l'écrasement du soufflet 19.

Un ressort 22, hélicoïdal, s'étend dans le soufflet 19 entre la base 12 et la paroi frontale (ici le piston 20) de la deuxième extrémité 19.2 du soufflet 19 pour former un élément élastique de rappel du soufflet 19 dans son état déployé. Le ressort 22 s'étend en partie autour de la douille saillant du deuxième tronçon 18.2. Le ressort 22 est choisi pour exercer un effort de rappel F1. On rappelle que l'effort de rappel exercé par un ressort hélicoïdal dépend de sa raideur et de son état de compression : l'effort de rappel F1 est maximal lorsque le soufflet 19 est dans son état rétracté (ressort 22 comprimé) et minimal lorsque le soufflet 19 est dans son état déployé (ressort 22 détendu). La jupe 21 limitant l'écrasement du soufflet 19 en venant en butée contre la base 12 lorsque le soufflet 19 est dans son état rétracté, la jupe 21 limite aussi l'écrasement du ressort 22.

L'indicateur 10 comprend en outre un dispositif d'attraction magnétique, généralement désigné en 23, comprenant un premier élément 23.1 solidaire de la paroi frontale (ici le piston 20) de la deuxième extrémité 19.2 du soufflet 19 et un deuxième élément 23.2 solidaire du sommet 13 du corps 11 pour exercer sur le premier élément 23.1 un effort de retenue du soufflet 19 dans son état déployé.

Le premier élément 23.1 comprend ici une pastille un matériau ferromagnétique collée sur le piston 20 de manière à saillir légèrement de la surface frontale de celui-ci en direction du sommet 13 et le deuxième élément 23.1 comprend un aimant collé dans la paroi formant le sommet 13 de manière à s'étendre là-aussi légèrement en saillie vers le soufflet 19. Lorsque le soufflet 19 est dans son état déployé, l'aimant et la pastille sont en contact et l'aimant exerce sur la pastille un effort d'attraction maximal qui dépend de la puissance de l'aimant. La puissance de l'aimant est choisie pour engendrer un effort d'attraction F2 qui sera défini plus loin.

L'indicateur 10 comprend enfin ici un contacteur électrique 24 fixé dans le corps 11 pour être actionné par la jupe 21 lorsque le soufflet 19 est dans son état rétracté. Le contacteur électrique 24 est par exemple relié à une unité électronique de commande du préhenseur (cette unité électronique de commande n'étant pas représentée) qui est par exemple agencée pour mémoriser des informations d'horodatage de l'activation du contacteur électrique 24 et éventuellement envoyer un signal d'alerte à un opérateur.

En fonctionnement, lorsque le préhenseur n'est pas utilisé, le circuit pneumatique 3 est à pression ambiante de sorte que le soufflet 19 est dans son état déployé. La jupe 21 est visible dans la fenêtre 15 et le contacteur électrique 24 n'est pas activé.

La pastille est alors en contact avec l'aimant et l'aimant exerce sur la pastille l'effort d'attraction F2. Le ressort 22 exerce l'effort de rappel F1 sur le capot 21. Le soufflet 19 est donc maintenu dans son état déployé par un effort de retenue F3=F1+F2 qui constitue un seuil d'activation de l'indicateur. On néglige ici la raideur du soufflet 19 qui contribue elle aussi au maintien du soufflet 19 dans son état déployé.

On veut que l'indicateur 10 permette la détection d'une dépression (ou niveau de vide) P- dans le circuit pneumatique 3. La dépression P- exerce sur le soufflet 19 un effort d'aspiration F4 qui dépend de la surface de la paroi frontale du soufflet 19 soumise à la dépression.

On choisit donc la puissance de l'aimant pour que l'effort de retenue F3 soit inférieur à l'effort d'aspiration F4 correspondant à la dépression P-.

Ainsi, tant que la dépression P- dans le circuit pneumatique n'est pas atteinte, le soufflet 19 reste dans son état déployé du fait que l'effort d'aspiration est inférieur à l'effort de retenue F3.

En revanche, dès que la dépression P- dans le circuit pneumatique est atteinte, le soufflet 19 passe de son état déployé à son état du fait que l'effort d'aspiration F4 est supérieur à l'effort de retenue F3. On sait que l'effort de rappel F1 augmente à mesure que le ressort 22 est comprimé mais dans le même temps l'effort d'attraction magnétique F2 a diminué très rapidement avec l'augmentation de l'entrefer séparant la pastille et l'aimant. Lorsque la jupe 21 vient en butée contre la base 12, le soufflet 19 a atteint son état rétracté. Ce faisant, la jupe 21 a également activé le contacteur électrique 24.

Si la dépression P- dans le circuit pneumatique 3 diminue (autrement dit, la pression dans le circuit pneumatique 3 augmente), l'effort d'aspiration diminue et le soufflet 19 commence à revenir dans son état déployé sous l'action du ressort 22 lorsque l'effort d'aspiration devient inférieur à l'effort de rappel F1.

On comprend qu'avec l'invention, l'indicateur 10 ne s'active pas progressivement mais d'un seul coup, dès que la dépression P- est atteinte.

On pourra choisir un ressort 22 de raideur très faible pour limiter la résistance du ressort 22 au passage du soufflet 19 vers son état rétracté. Avec une raideur très faible, le ressort 22 ne pourra ramener le soufflet 19 vers son état déployé une fois que le circuit de vide sera sensiblement à pression ambiante.

Bien entendu, l'invention n'est pas limitée au mode de réalisation décrit mais englobe toute variante entrant dans le champ de l'invention telle que définie par les revendications.

En particulier, l'indicateur peut avoir une structure différente de celle décrite.

Il est ainsi possible de prévoir une butée empêchant la pastille ferromagnétique de venir toucher l'aimant lorsque le soufflet atteint son état déployé : un entrefer est ainsi ménagé entre eux. Sachant que l'effort d'attraction magnétique dépend de l'entrefer, un réglage de l'entrefer permet un réglage de l'effort d'attraction magnétique. Ce réglage peut être obtenu en réglant la position de la butée et/ou de l'aimant. L'aimant a par exemple une surface externe filetée pour pouvoir être plus ou moins vissé dans le sommet du corps.

Le soufflet peut être borgne : la deuxième extrémité du soufflet est obturée par une paroi frontale en une seule pièce avec le reste du soufflet et la pastille ferromagnétique (ou l'aimant) est fixée directement sur la paroi frontale. Le soufflet peut donc être dépourvu de capot ou piston.

Le soufflet peut être lui-même contrastant par rapport à la paroi latérale du corps.

Il n'est pas indispensable que le soufflet et/ou la jupe du piston soit dans un matériau contrastant.

Le piston peut être en matériau ferromagnétique ou aimanté pour former lui-même l'un des éléments du dispositif d'attraction magnétique.

La pastille ferromagnétique peut être portée par le corps et l'aimant par la deuxième extrémité du soufflet.

L'utilisation d'un contacteur électrique est facultative.

L'utilisation d'un organe élastique de rappel est facultative ou celui-ci peut avoir une forme différente de celle décrite comme par exemple un ressort de traction s'étendant entre le piston et le sommet du corps. Le soufflet peut avoir une élasticité lui permettant de retourner seul dans son état déployé.

L'embout de connexion de l'indicateur au circuit pneumatique peut aussi être un embout à raccordement instantané ou un embout taraudé.

L'indicateur peut être monté en tout point du circuit pneumatique, c'est-à-dire sur tout élément du circuit comme un élément de liaison (canalisation, conduit...) ou un élément terminal (par exemple, dans l'application illustrée, il est possible de monter l'indicateur directement sur une ventouse 2. Chaque ventouse 2 pourrait ainsi être équipée d'un indicateur selon l'invention pour contrôler son bon fonctionnement.

Il est envisageable de ménager la fenêtre sur la partie basse du corps de l'indicateur. On peut également prévoir deux fenêtres (haute et basse) avec un piston bicolore (rouge en haut et vert en bas par exemple).

L'indicateur de l'invention est utilisable pour d'autres applications que la manutention et plus généralement dans toute installation ou machine pneumatique dans laquelle la détection d'une dépression est utile. Ainsi, dans le mode de réalisation décrit, la présence de la dépression est une information représentative d'un fonctionnement normal du préhenseur. L'indicateur de l'invention peut être utilisé de la même manière dans une installation ou machine dans laquelle la présence d'une dépression révèle une défaillance.

La paroi latérale 14 est pourvue d'au moins une fenêtre 15 pour visualiser le soufflet 19 dans l'un de ses états. Ar « soufflet », on entend ici le soufflet lui-même ou tout élément solidaire de l'extrémité mobile du soufflet. Le piston constitue un tel élément, un capuchon constituerait aussi un tel élément...

## Revendications

1. Indicateur (10) visuel de dépression dans un circuit pneumatique (3), comprenant : un corps (11) creux ayant une base (12) et un sommet (13) qui sont reliés par au moins une paroi latérale (14) ; un élément de raccordement (16) au circuit pneumatique (3) qui est solidaire de la base (12) du corps (11) et qui débouche dans le corps (11) par un conduit (18) ménagé dans la base (12) du corps (11) ; un soufflet (19) qui a une première extrémité (19.1) ouverte fixée à la base (12) en regard du conduit (18) et une deuxième extrémité (19.2) fermée et qui est déplaçable entre un état déployé dans lequel la deuxième extrémité (19.2) est rapprochée du sommet (13) et un état rétracté dans lequel la deuxième extrémité (19.2) est rapprochée de la base (12), la paroi latérale (14) étant pourvue d'au moins une fenêtre (15) pour visualiser le soufflet (19) dans l'un de ses états ; et un dispositif d'attraction magnétique (23) comprenant un premier élément (23.1) solidaire d'une paroi frontale de la deuxième extrémité (19.2) du soufflet (19) et un deuxième élément (23.2) solidaire du sommet (13) pour exercer sur le premier élément (23.1) un effort de retenue prédéterminé lorsque le soufflet (19) est dans son état déployé.

2. Indicateur selon la revendication 1, comprenant un élément élastique de rappel du soufflet (19) dans son état déployé.

3. Indicateur selon la revendication 2, dans lequel l'élément élastique de rappel est un ressort (22) hélicoïdal s'étendant dans le soufflet (19) entre la base (12) et la paroi frontale de la deuxième extrémité (19.2) du soufflet (19).

4. Indicateur selon l'une quelconque des revendications précédentes, dans lequel la deuxième extrémité (19.2) du soufflet (19) est recouverte par un piston (20) ayant une jupe (21) latérale visible par la fenêtre (15) lorsque le soufflet (19) est dans l'état correspondant.

5. Indicateur selon la revendication 4, dans lequel le piston (20) constitue la paroi frontale de la deuxième extrémité (19.2) du soufflet (19).

6. Indicateur selon la revendication 4 ou 5, dans lequel la jupe (21) est agencée pour contraster visuellement avec la paroi latérale (14) du corps (11) lorsque la jupe (21) du piston (20) est visible par la fenêtre (15).

7. Indicateur selon l'une quelconque des revendications 4 à 6, comprenant un contacteur électrique (24) fixé dans le corps (11) pour être actionné par la jupe (21) lorsque le soufflet (19) est dans son état rétracté.

8. Indicateur selon l'une quelconque des revendications précédentes, dans lequel le premier élément (23.1) comprend un matériau ferromagnétique et le deuxième élément (23.2) comprend un aimant.

9. Indicateur selon l'une quelconque des revendications précédentes, dans lequel l'extrémité ouverte (19.1) du soufflet (19) enserre élastiquement un embout (17) tubulaire qui s'étend en saillie de la base (12) autour du conduit (18).

10. Indicateur selon l'une quelconque des revendications précédentes, dans lequel l'élément de raccordement est un embout (16) s'étendant en saillie de la base (12) à l'extérieur du corps (11).

11. Dispositif de préhension (1) à ventouses (2) appartenant à un circuit pneumatique (3) auquel est raccordé au moins un indicateur selon l'une quelconque des revendications précédentes.
